# EUROPÄISCHE PATENTANMELDUNG

(11) **EP 1 041 376 A2**
(43) Veröffentlichungstag der Anmeldung: **04.10.2000**
(21) Anmeldenummer: 00102499.1
(22) Anmeldetag: 05.02.2000
(51) Int. Cl.: G01M 17/02

(54) **Vibrationsakustisches Diagnosesystem zur Erfassung von Schäden an Kraftfahrzeugbauteilen**

(30) Priorität: 31.03.1999 DE 19914533
(71) Anmelder: Bayerische Motoren Werke Aktiengesellschaft, 80809 München (DE)
(72) Erfinder: Panajott, Andreas, 83043 Bad Aibling (DE)

(57) **Zusammenfassung**

Die Erfindung betrifft ein vibrationsakustisches Diagnosesystem zur Erfassung von Schäden an Kraftfahrzeugbauteilen mit zumindest einem Erfassungsmittel zur Aufnahme von Spektren, insbesondere Schall- oder Schwingungs-Frequenzen oder Frequenzspektren (Ist-Spektren), einer Speichereinrichtung zur Speicherung von jeweils einem bestimmten Betriebszustand zugeordneten Spektren (Soll-Spektren), einer Vergleichseinrichtung zum Vergleichen der erfaßten und der gespeicherten Spektren und einer Anzeigeeinheit zum Anzeigen einer Unregelmäßigkeit, wenn die Abweichung zwischen dem erfaßten und der gespeicherten Spektren eine Grenze überschreitet. In der ersten Betriebsphase des Kraftfahrzeugs werden aus den erfaßten Ist-Spektren die gespeicherten Soll-Spektren erzeugt und in dem Speicher ablegt.

Um eine fahrzeugindividuelle Detektion von allen Bauteitschäden erfassen zu können, ist es vorgesehen, die Ist- und Soll-Spektren über einen solchen Vergleichszeitraum miteinander zu vergleichen, daß eine genügende Anzahl von verschiedenen Betriebszuständen erfaßbar ist.

## Beschreibung

Die Erfindung betrifft ein Vibrationsakustisches Diagnosesystem gemäß dem Oberbegriff des Patentanspruchs 1.

Üblicherweise werden Bauteile eines Kraftfahrzeugs hinsichtlich ihrer Festigkeit und Belastbarkeit in der Regel für überdurchschnittliche Anforderungen dimensioniert, damit gewährleistet ist, daß die Fahrzeuge bis zu deren Entsorgung möglichst schadenfrei fahren können. Bei Fahrzeugen, die jedoch eine hohe Kilometer-Leistung ausweisen oder ungewöhnlich stark beansprucht werden, sind vor dem Zeitpunkt der Entsorgung Bauteilschäden, insbesondere Bauteilanrisse, nicht ganz auszuschließen. Solche Schäden wirken sich negativ auf die Fahrzeugsicherheit aus. Vorzeitige Schäden an Bauteilen können auch durch Mißbrauch entstehen.

Prinzipiell sind eine Reihe von Fahrzeugdiagnosevorrichtungen bekannt, die Frequenz- Geräusch-, oder Schallüberwachungsvorrichtungen umfassen. Beispielsweise ist aus der DE 32 01 897 A1 ein Verfahren bekannt, welches sich mit einer Fehlerdiagnose an Kraftfahrzeugen befaßt. Durch einen Vergleich von gespeicherten und erfaßten Geräuschen/Frequenzen ist eine Fehlererfassung und Zuordnung möglich. Die Geräusche können über elektromechanische Schalldetektoren und -analysatoren erfaßt werden. Der Vergleich findet mittels Komperatorvorrichtungen während der Betriebs des Fahrzeugs statt.

Nachteilig in der DE 32 01 897 A1 ist die Verwendung von Referenz-Schallmustern von Vergleichsfahrzeugen. Für die Detektion von Rissen in Bauteilen kann ein solches Referenzsignal jedoch nicht verwendet werden, da jedes Fahrzeug bei solchen Beschädigungen eine andere fahrzeugspezifische Signal- bzw. Frequenzänderung verursacht. Überdies bestehen Toleranzen beim Zusammenbau der Fahrzeuge, so daß ein Fahrzeug bezüglich seiner bei bestimmten Betriebszuständen erzeugten Frequenzspektren keinem anderen Fahrzeug gleicht.

In der EP 0 178 468 A2 ist ein Verfahren zum Bestimmen reparaturbedürftiger Bauteile einer Fahrzeugeinheit beschrieben, bei dem im Neuzustand Schwingungen aufgenommen und gespeichert werden. Mit diesen Schwingungen werden zu einem späteren Zeitpunkt die dann auftretenden Schwingungen verglichen.

Allerdings werden die Schwingungen nur bei konstanten Bedingungen durchgeführt. Manche Defekte treten jedoch nur bei bestimmten Schwingungssituationen auf.

Aufgabe der vorliegenden Erfindung ist es, ein eingangs genanntes vibrationsakustisches Diagnosesystem derart weiterzuentwickeln, daß möglichst alle Schäden an Bauteilen bei Kraftfahrzeugen fahrzeugindividuell festgestellt werden können, um so einen rechtzeitigen Austausch eines defekten Bauteils zu ermöglichen.

Diese Aufgabe ist durch die im Anspruch 1 genannten Merkmale gelöst.

Ein Element der vorliegenden Erfindung ist es, das jeweilige Soll-Spektrum für ein Fahrzeug individuell und in der ersten Betriebsphase des Fahrzeugs, in der keine Bauteilschäden zu vermuten sind, durch den Betrieb des Fahrzeugs selbst zu erzeugen. Als Spektren eignen sich in besonderer Weise Frequenzverläufe. Es können aber auch andere Zeitverläufe verwendet werden. Je nach Betriebszustand des Fahrzeugs, also Geschwindigkeit, Fahrdynamik, Straßenbeschaffenheit, werden an einer Vielzahl von Stellen Schwingungen und Vibrationen erzeugt, welche sich durch das Fahrzeug fortpflanzen und an Stellen, an denen die Schwingungen aufgenommen werden zu bestimmten Spektren und Frequenzmustern führen. Diese Spektren sind bei jedem individuellen Fahrzeug anders, da beim Zusammenbau Toleranzen zugestanden werden müssen. Die Erzeugung des Soll-Spektrums wird somit beim Betrieb des Fahrzeugs für jede Betriebsbedingung gesondert durchgeführt. Um die jeweilige Betriebsbedingung zu charakterisieren, werden beispielsweise die Drehzahl, die Geschwindigkeit, der Fahrbahnreibwert, etc. ermittelt und berücksichtigt.

Da man nicht unbedingt aus einem Kurzvergleich bei einem bestimmten Betriebszustand auf das Vorliegen eines Schadens in einem Bauteil schließen kann, soll die Vergleichsdauer erfindungsgemäß ausreichend lang gewählt werden. Insbesondere bei Anrissdetektionen von Bauteilen ist es wichtig, mehrere Fahrzustände in Betracht zu ziehen, da die Signalempfindlichkeit unterschiedlich hoch ist. Der Vergleich zwischen dem Ist- und Soll-Spektrum wird damit während des gesamten Betriebs des Fahrzeugs zu jedem Zeitpunkt erfaßt.

Die Aufnahme der Spektren, insbesondere der Frequenzspektren, erfolgt über Erfassungsmittel wie Druckaufnehmer, Mikrofone, Piezoelemente, Vibrationssensoren, etc. Dabei können allgemein vibrationserfassende oder schallerfassende Mittel verwendet werden. Die in der ersten Betriebsphase des Kraftfahrzeugs erfaßten Ist-Spektren werden von einer Einrichtung zunächst aufgenommen. Mit ihnen wird dann das Soll-Spektrum erzeugt, welches dann individuell auf dieses Fahrzeug zugeschnitten ist. Das Soll-Spektrum wird in einem Speicher abgelegt.

Nach der ersten Betriebsphase werden kontinuierlich die Ist-Spektren mit den im Speicher abgelegten Soll-Spektren verglichen. Unterscheiden sich beide Spektren in bestimmter Weise voneinander, so ist von einem Schaden in einem Bauteil auszugehen. Dies wird durch eine Anzeigeeinheit dem Fahrzeugbediener angezeigt. Die erste Betriebsphase kann sich dabei über eine festgelegte, zu fahrende Fahrdistanz, über eine festgelegte Betriebszeit oder über eine bestimmte Anzahl von Betriebszuständen erstrecken. Wichtig ist, das für die Erzeugung des Soll-Spektrums eine bestimmte Menge von Betriebszuständen erfaßt werden. Dabei soll möglichst eine Erfassung über alle möglichen Betriebszustände erfolgen.

Bei einer Feststellung einer Unregelmäßigkeit kann das in diesem Zeitraum vorliegende Ist-Spektrum - vorzugsweise bei verschiedenen Betriebszuständen - in einem weiteren Speicherelement abgelegt werden. Diese Spektren können dann bei einem Werkstattaufenthalt analysiert werden. Durch eine Analyse der abgespeicherten Spektren kann auf das beschädigte Bauteil geschlossen werden.

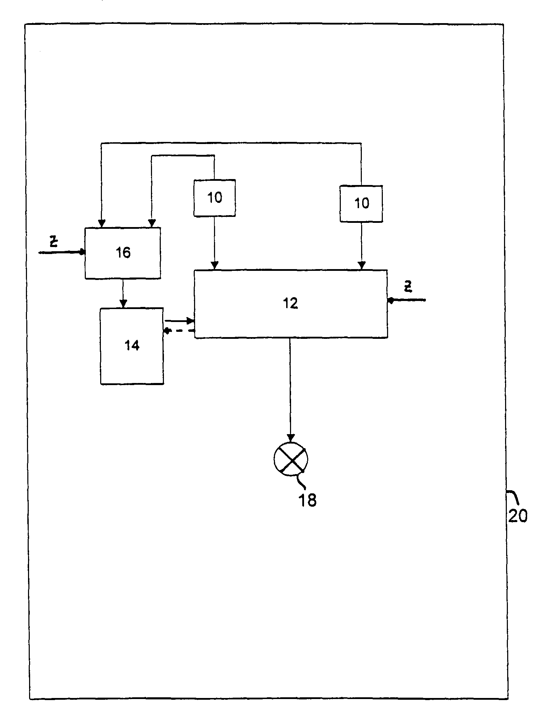

Eine vorteilhafte und einfache Ausführungsform der Erfindung wird nachfolgend anhand der einzigen beiliegenden Zeichnung näher erläutert. Die Zeichnung zeigt ein einfaches schematisches Blockdiagramm einer erfindungsgemäßen Vorrichtung.

In der Figur ist nur schematisch ein Fahrzeug 20 dargestellt, in welchem zwei Schwingungsaufnehmer 10 angeordnet sind. Im vorliegende Fall handelt es sich dabei um einen Aufnehmer für akustische Schwingungen und einen Aufnehmer für Vibrationsschwingungen. Die beiden Schwingungsaufnehmer 10 stellen ihre Informationen einer Auswerte- und Vergleichseinrichtung 12 zur Verfügung.

Gleichzeitig stellen die Aufnehmer 10 ihre Information einer Einheit 16 zur Generierung eines Soll-Frequenzspektrums zur Verfügung. Der Einheit 16 werden auch noch eine bestimmte Anzahl von Signalen Z zugeführt, die den jeweiligen Betriebszustand charakterisieren.

In der ersten Phase des Fahrzeugbetriebs werden die je nach den Betriebszuständen auftretenden Fahrzeugschwingungen von den Schwingungsaufnehmern 10 erfaßt und der Einheit 16 zur Verfügung gestellt. Diese erzeugt entsprechend der Betriebszustände Frequenzspektren und speichert diese in einem Speicher 14 ab. In diesem Zeitraum ist die Auswerte- und Vergleichseinrichtung 12 nicht aktiv.

Die erste Betriebsphase erstreckt sich im vorliegenden Ausführungsbeispiel über die ersten 500 zu fahrenden Kilometer. Nach dieser Betriebszeit wird die Einrichtung 16 deaktiviert und die Auswerte- und Vergleichseinrichtung 12 aktiviert. Nunmehr stellen die Schwingungsaufnehmer 10 ihre Information dieser Einheit 12 zur Verfügung, welche zudem die gleichen Betriebsbedingungen wie zuvor die Einheit 16 erhält. Die in der Auswerte- und Vergleichseinrichtung 12 vorliegenden Ist-Frequenzspektren werden nunmehr je nach Betriebszustand mit den entsprechenden, im Speicher vorliegenden Soll-Frequenzspektren verglichen. Stellt die Auswerte- und Vergleichseinheit 12 eine zu große Abweichung der beiden Frequenzspektren fest, so wird ein Signal an die Anzeigeeinheit - in der vorliegenden Ausführungsform eine Lampe 18 im Display - abgegeben. Gleichzeitig wird in einem Fehlerspeicher, der im Speicher 14 umfaßt ist, das Ist-Frequenzspektrum abgelegt, bei dem die Unstimmigkeit und Abweichung vorlag.

Der Fahrzeugbediener kann nach Anzeige der Unregelmäßigkeit über die Anzeigeeinheit 18 eine Werkstatt aufsuchen. In der Werkstatt werden aus dem Fehlerspeicher 14 die darin abgespeicherten Ist-Frequenzspektren ausgelesen. Durch einen Vergleich mit den ebenfalls vorhandenen Soll-Frequenzspektren sowie bei der Werkstatt parallel befindlichen Vergleichsspektren kann auf die Fehlerquelle geschlossen werden. Insbesondere kann der Ort, das beschädigte Teil und die Art der Beschädigung aus dem Frequenzspektrum und einem Vergleich mit Referenzspektren geschlossen werden.

Insgesamt gestattet das vorliegende Vibrationsakustische Diagnosesystem eine einfache Vorrichtung zu Erfassung von Schäden an Kraftfahrzeugbauteilen, wobei eine fahrzeugindividuelle Abstimmung möglich ist. Damit läßt sich die Fahrsicherheit erhöhen, da ein rechtzeitiger Austausch eines defekten Bauteils ermöglicht wird. Bei bestimmten kritischen Systemen müssen die Bauteile auch nicht mehr mehrfach überdimensioniert werden. Auch eine Erkennung von Radunwuchten ist mit der vorliegenden Erfindung möglich.

Die vorliegende Ausführungsform wurde anhand von Frequenzspektren erläutert. Natürlich ist es auch möglich, andere Spektren zu verwenden. Beispielsweise können die Signale von mehreren Aufnehmern erfaßt und miteinander verglichen werden. Die sich aus dem Vergleich ergebenden Beziehungen können ebenfalls in Form eines Spektrums verwendet werden.

## Patentansprüche

1. Vibrationsakustisches Diagnosesystem zur Erfassung von Schäden an Kraftfahrzeugbauteilen mit
zumindest einem Erfassungsmittel zur Aufnahme von Spektren, insbesondere Schall- oder Schwingungs-Frequenzen oder -Frequenzspektren im Kraftfahrzeug (Ist-Spektren),
einer Einrichtung zur Erzeugung von jeweils einem bestimmten Betriebszustand zugeordneten Spektren (Soll-Spektren) aus den erfaßten Ist-Spektren in der ersten Betriebsphase des Kraftfahrzeugs,
einer Speichereinrichtung zur Speicherung der Soll-Spektren,
einer Vergleichseinrichtung zum Vergleichen der erfaßten und der gespeicherten Spektren und
einer Anzeigeeinheit zum Anzeigen einer Unregelmäßigkeit, wenn die Abweichung zwischen dem erfaßten und der gespeicherten Spektren eine Grenze überschreitet,
dadurch gekennzeichnet,
daß bei dem Vergleich von Ist- und Soll-Spektrum der Vergleichszeitraum derart über eine bestimmte Fahrstrecke, einen bestimmten Fahrzeitraum oder eine bestimmte Anzahl von Betriebszuständen erfolgt, daß eine genügende Anzahl von verschiedenen Betriebszuständen erfaßt wird.

2. Vibrationsakustisches Diagnosesystem nach Anspruch 1,
dadurch gekennzeichnet,
daß sich die erste Betriebsphase über eine festgelegte, zu fahrende Distanz oder über eine festgelegte Betriebszeit oder über eine vorgegebene Anzahl von Betriebszuständen erstreckt.

3. Vibrationsakustisches Diagnosesystem nach Anspruch 1 oder 2,
dadurch gekennzeichnet,
daß die Erzeugung der Soll-Spektren zumindest im wesentlichen über alle anfallenden Betriebszustände erfolgt.

4. Vibrationsakustisches Diagnosesystem nach einem der vorhergehenden Ansprüche,
dadurch gekennzeichnet,
daß als Erfassungsmittel ein oder mehrere Mikrophone oder ein oder mehrere Vibrationssensoren oder ein oder mehrere Drucksensoren vorgesehen sind.
